# EUROPEAN PATENT SPECIFICATION

(11) **EP 2 561 480 B1**
(45) Date of publication and mention of the grant of the patent: **16.10.2019**
(21) Application number: 11717554.7
(22) Date of filing: 21.04.2011
(51) Int. Cl.: G06T 7/564

(54) **METHOD AND SYSTEM FOR ANALYZING GEOMETRIC PARAMETERS OF AN OBJECT**
VERFAHREN UND SYSTEM ZUR ANALYSE VON GEOMETRISCHEN PARAMETERN EINES OBJEKTS
PROCÉDÉ ET SYSTÈME D'ANALYSE DE PARAMÈTRES GÉOMÉTRIQUES D'UN OBJET

(30) Priority: 21.04.2010 FR 1053046
(43) Date of publication of application: 27.02.2013
(73) Proprietor: Accenture Global Services Limited, Dublin 4 (IE)
(72) Inventor: BOUTBOUL, Laurent, F-75007 Paris (FR); NOEUVEGLISE, Stéphane, F-78000 Versailles (FR)
(74) Representative: Boult Wade Tennant LLP
(86) International application number: PCT/EP2011/056465
(87) International publication number: WO 2011/131770

(56) References cited:
- EP-A2- 1 424 656
- EP-A2- 1 640 915
- FR-A1- 2 951 563
- US-A1- 2002 145 103
- US-A1- 2003 035 061
- MATUSIK W ET AL: "Image-based 3D Photography using Opacity Hulls", ACM TRANSACTIONS ON GRAPHICS, ACM, US LNKD- DOI:10.1145/566570.566599, vol. 21, no. 3, 1 July 2002 (2002-07-01), pages 427-437, XP002458869, ISSN: 0730-0301

## Description

### Field of the Disclosure

The present disclosure relates to a method for analyzing geometric parameters of an object and to a system for implementing such a method.

### Discussion of Prior Art

There exist different methods for detecting the shape of an object by optical detection of characteristic points of the object and reconstruction thereof as a combination of known elementary shapes.

But the many known shape recognition methods often use geometric shapes that can be described by a mathematical formula; thereby, such methods require, for their acquisition and for their use, optical means and calculation means, which are both complicated and expensive.

However, often it would be desirable to be able to simply recognize the shape of an object for relatively global evaluations such as evaluating the volume of the object.

US 2003/0035061 describes a background lighting module that illuminates an object from behind by visible light.

US 2002/0145103 describes a method and apparatus for obtaining the shape of an object by observing silhouettes of the object.

EP 1424656 describes an apparatus for generating a three-dimensional model using two CCD cameras that are spaced apart from each other by a predetermined distance.

EP 1640915 describes a method of providing a volumetric representation of a three-dimensional object.

FR 2951563 describes a method of illuminating an object with a backlight and capturing an image with a camera to obtain a silhouette of the object.

MATUSIK WET AL: "Image-based 3D Photography using Opacity Hulls", ACM TRANSACT! ONS ON GRAPHICS, ACM, US LNKD- D01:10.1145/566570.566599, vol. 21, no. 3, 1 July 2002 (2002-07-01), pages 427-437, ISSN: 0730-0301 describes a system for acquiring and displaying graphical models of objects formed from specular and fuzzy materials, such as fur and feathers.

### Summary of the Present Disclosure

The present disclosure aims at developing a method and a system that enables the simple and rapid detection of the shape of an object or, at least, an approximate shape of the object, with a sufficient accuracy for a general evaluation of its volume or of its bulk.

For this purpose, according to a first aspect there is provided a method of geometrical analysis of an object according to claim 1. According to a second aspect there is provided a system according to claim 2.

In an illustrative example, there is described a method of geometrical analysis of an object comprising: placing the object in front of a lit surface, such that it is silhouetted; taking at least one photograph of the silhouetted object to obtain an image with an outline of the object; obtaining geometrical parameters of the object based on the outline of the silhouetted object.

Thus, rather than the common practice of detecting characteristic points of the object by optical ranging of these points and the determination of the coordinates of these points in a reference frame, such a method requiring in practice that the characteristic points are determined particularly carefully, the present disclosure requires no more than the outline of the object, which enables characteristic points or the characteristic contour of the projection of the object to be obtained in a much simpler fashion, for then reconstructing two-dimensional or three-dimensional data of the object or data relating to that of the object.

According to an illustrative example, the method further comprises;
▪ taking at least two photographs of the object by rotating it around a defined point in front of the lit surface,
▪ defining an envelope surface for the object as the intersection of the object image capture cones according to different pivoting angles of the object,
▪ the envelope surface being the intersection of the conical surfaces each generated by a generatrix originating from each point from which the object is photographed after a relative rotation of the image capture point, the object being considered as motionless, the generatrix bearing on the directrix curve formed by the outline of the object on the image corresponding to this image capture point,
▪ determining the geometric parameters of the intersection surface or of the volume that it surrounds.

Thus, by combining at least two image captures of the object, an envelope of the object can be defined as a three-dimensional surface formed by the intersection of two cones each generated from the image capture points and bearing on the directrix curve formed by the outline of each of the image captures.

This envelope contains the object.

By multiplying the number of image captures, for example increasing the number to three or more, and similarly the number of cone intersections, the envelope surface is made closer and closer to the real surface of the object according to the desired accuracy.

In most cases, two or three image captures are sufficient to obtain an envelope surface accurate enough for the method of assessing features of the object such as its volume or its bulk.

According to an illustrative example, at least two image captures of the object are performed, by rotating the object by a determined angle around an axis or a point with respect to the image capture device.

According to an illustrative example, the method further comprises:
▪ capturing at least two images of the object by rotating it around a defined point in front of the lit surface,
▪ defining an envelope surface for the object as the intersection of the object image capture cones according to different pivoting angles of the object,
▪ the envelope surface being the intersection of the conical surfaces each generated by a generatrix originating from each point from which the object is photographed after a relative rotation of the image capture point, the object being considered as motionless, the generatrix bearing on the directrix curve formed by the outline of the object on the image corresponding to this image capture point,
▪ determining the geometric parameters of the intersection surface or of the volume that it surrounds.

To define the geometric envelope of the object, it is sufficient to intersect the different cones having their apexes placed in the positions rotated by the relative pivoting angle of the object. This solution has the advantage of using the same image capture device and the same lit surface to capture the different images.

The present disclosure also relates to a system for analyzing geometric parameters of an object implementing the method defined hereabove. This system comprises a support receiving the object; at least one set formed of an image capture device placed in front of the object and of a lit surface placed behind the object in line with the image capture device and the object such that the object as captured by the image capture device is silhouetted; and a system for using the outline of the image provided by the image capture device.

According to an illustrative example, the system for analyzing the geometric parameters of an object implementing the method defined hereabove comprises a support receiving the object, at least one set formed of an image capture device provided with a combined light source, associated with the position of the image capture device, this set being placed in front of the object and a retroreflective surface placed behind the object in line with the image capture device and its combined light source to light the object from behind, by reflection, with respect to the image capture device as well as a system for exploiting the outline of the image provided by the image capture device.

This system enables the contour of the object to be defined in difficult lighting conditions, for example, for a light or white objects, since all the light beam falling on the retroreflective surface associated with this image capture device will be reflected to the image capture device. This enables to obtain a particularly accurate outline contour. The cutting out performed on the image of the outline will be all the clearer as the light source equipping the image capture device will be close to the image capture device and in particular if the light source is, according to another advantageous feature of the present disclosure, a light corona surrounding the lens of the image capture device.

The precision of the outline contour thus obtained is all the more surprising as the object is itself lit from the front.

The precision of the contour results from the reflection of the entire light beam falling on the retroreflective surface, which has a much greater reflective power than the object, even if said object is shiny, since not all the surface points of the object form elementary mirrors reflecting the entire light beam back towards the light source while all points of the retroreflective surface form elementary mirrors reflecting the light beam back to the source which, according to the present disclosure, is practically incorporated with the image capture device.

According to an illustrative example, the system is formed of three sets, each formed of an image capture device or of an image capture device with a combined light source as well as with a lit surface or a retroreflective surface, positioned on either side of the obj ect, these sets being arranged along three spatially orthogonal directions, or at least along three non-coplanar directions.

According to an illustrative example, the support of the object pivots in a defined manner with respect to a point or with respect to an axis.

According to an illustrative example, the support on which the object is placed is transparent so as not to alter the contour of the captured image or to enable the lighting of the object from below without this lighting being disrupted by the support.

According to an illustrative example, the support is formed of a surface for receiving the object and bordered by two upward-directed surfaces inclined with respect to the vertical direction and joining the support surface via a curved area.

An image capture support having a generally horizontal square or rectangular surface and with two edges disappearing in a transient curved area to extend in the inclined upward-directed surfaces is thus formed.

According to an illustrative example, the retroreflective surfaces are surfaces substantially parallel to the support surface and to the upward-directed surfaces and are located at a given distance under and behind them, the retroreflective surfaces being substantially perpendicular to the image capture direction of the associated image capture device to optimize the retroreflective effect.

Thus, the transparent support surface, generally made of polycarbonate, does not disturb the image capture to define its contour, the edge between the support surface and the upward-directed surfaces being erased by the curved area shape connecting each of these two surfaces.

According to an illustrative example, the support, which is a fixed element of the system, is taken into account in the calculation program defining the outline of the object.

### Brief Description of the Drawings

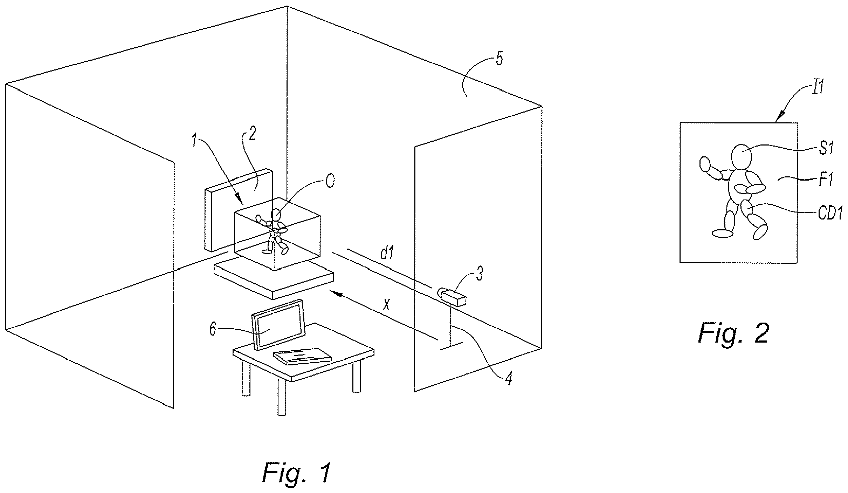

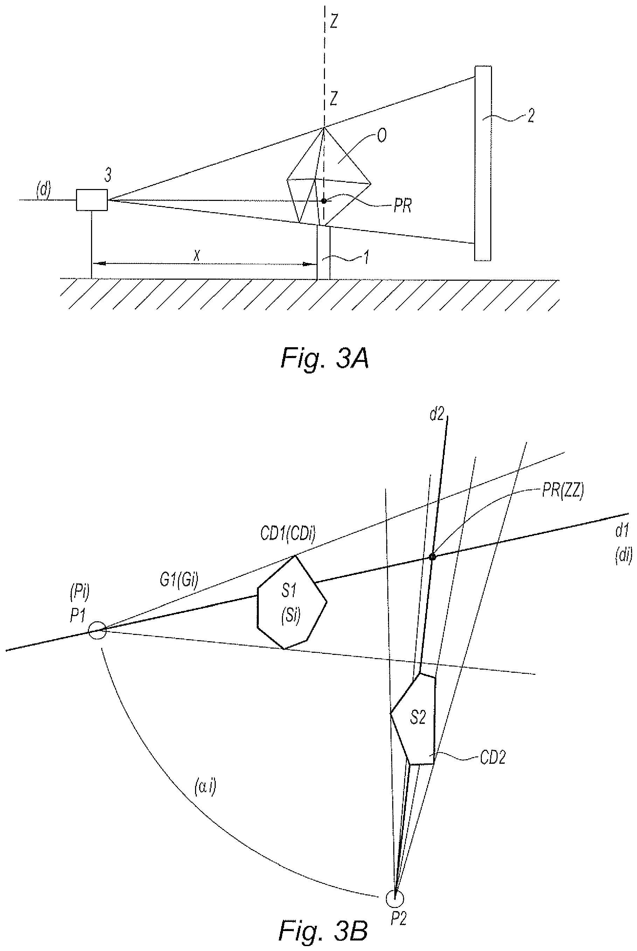

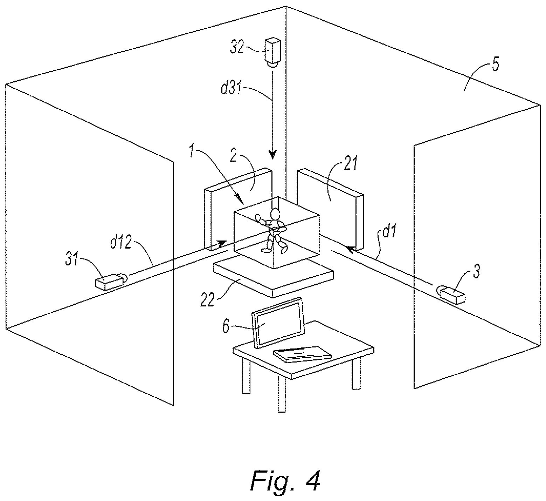

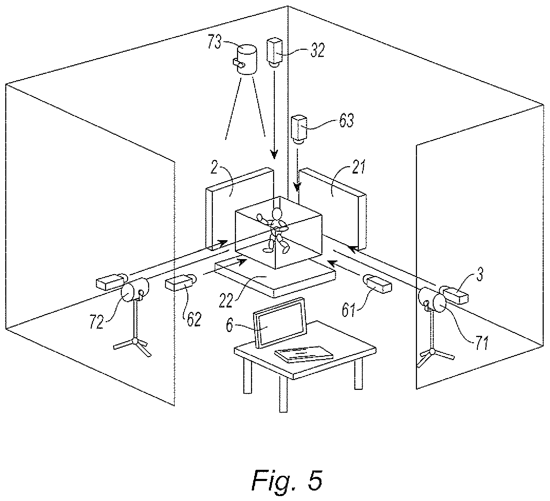

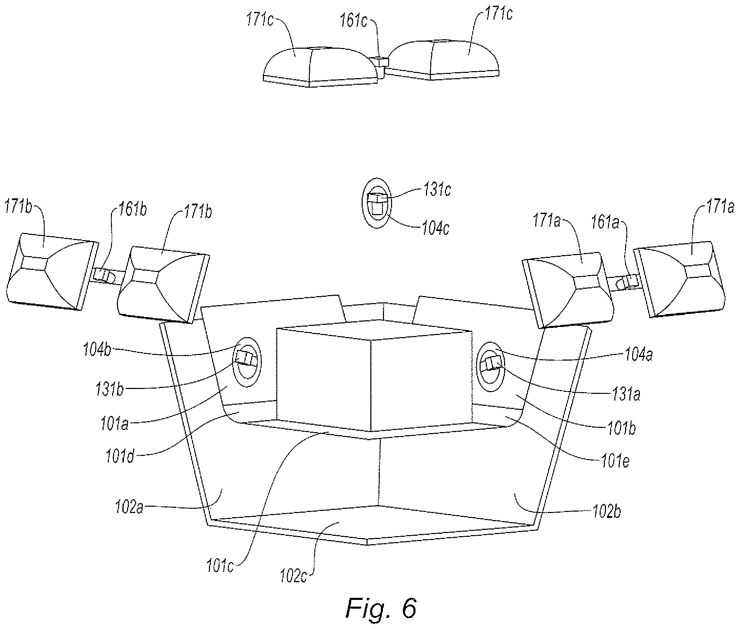

The present disclosure will be described in further detail hereafter by means of the accompanying drawings, among which:
▪ Figure 1 is a schematic diagram of a method according to an illustrative example of the present disclosure and of an elementary system for implementing it,
▪ Figure 2 is a simplified view of a captured image of the object silhouetted in front of the lit surface,
▪ Figure 3A is a diagram of the system,
▪ Figure 3B is a diagram representing a definition of the envelope surface of the object based on two image captures,
▪ Figure 4 shows a system according to the present disclosure, with three sets for image captures along three perpendicular directions,
▪ Figure 5 is a more complete diagram of a system implementing the method of the present disclosure,
▪ Figure 6 is a simplified view of an embodiment of the system with three sets for image captures along three spatial directions.

### Description of the Present Disclosure

According to Figure 1, an example relates to a method and a system for analyzing and defining features or geometric parameters of an object O. This object, represented by a figurine, is placed on a support 1 in front of a lit surface 2, for example, a backlit panel, to light from behind the object for which an analysis and/or a definition of its shape or, more generally, certain parameters, are desired to be obtained without having to perform an accurate point-by-point detection of the object.

Support 1 is represented by a cube surrounding object O. For example, the support 1 has the form of an articulated bracket or articulated jib crane on which object O is placed and/or fixed.

In front of object O, silhouetted with respect thereto, the system comprises an image capture device 3 such as a video camera or a photographic camera, placed in a precise position with respect to the position of the object, on a support 4, which is at a fixed or adjustable height and distance with respect to the position of the object, that is, with respect to its support 1. Lit surface 2 is, preferably, a surface with evenly distributed lighting.

The system is protected against any parasitic exterior lighting by panels 5 or screens, which may also be the partitions of the premises in which the system is located.

According to an example method, object O is silhouetted by lit surface 2 without lighting the object from the front, from the side of image capture device 3, and a view of the silhouetted object is captured. Thus, the obtained image I1 of Figure 2 shows outline S1 of the
object, which stands out on a light background F1. A simple analysis of image I1 provides the coordinates of the points of the contour (CD1) of outline S1.

The object may also be lit from the front but the contrast with the back lighting is for example sufficient to enable the contour of the object to be defined as an outline.

The image thus taken of outline S1 of view I1 and the definition of the position of image capture device 3 with respect to object O enable certain geometric features of the object to be determined, such as two-dimensional features in the case of a single image capture or, more generally, three-dimensional features for several image captures, as will be detailed hereafter.

Figure 1 schematically shows a computer 6 receiving the captured images and controlling, if need be, the image capture operations and the determination of the geometric features of the object.

Figures 3A and 3B very schematically show the conditions of an image capture and what use is made of the shape of the object according to a method of the present disclosure.

Figure 3A is a side view of an elementary system providing an example of the implementation of a method of the present disclosure. A screen-shaped lit surface 2 faces an image capture device 3 with a support 1 between them to receive object O to be analyzed. Support 1 according to this embodiment pivots around a vertical axis ZZ. Image capture device 3 is located at distance (x) from axis ZZ in the horizontal plane and it has a horizontal image capture direction (d), crossing axis ZZ at a reference point PR. The distance separating lit surface 2 and support 1 is not accurately determined since the only thing that matters is the coverage of object O by lit surface 2, as seen and captured by image capture device 3, so that the contour of object O is contained within lit surface 2. Object O is installed on its support 1 in any manner, although preferably it is installed by selecting a position substantially regularly distributed around reference PR. Reference point PR does not necessarily correspond, a priori, to the center of object O.

According to one example, reference point PR of support 1 is a joint enabling to pivot around an axis perpendicular to axis ZZ, that is, in the conditions of Figure 1, around a horizontal axis.

Support 1 comprises location means, not illustrated, enabling the pivoting angle (αi) around axis ZZ to be determined and, in some cases, the pivoting angle around an axis perpendicular to axis ZZ, passing through reference point PR, to be determined.

This system enables different image captures of object O to be performed, without modifying or displacing the set formed of lit surface 2 and of image capture device 3; these different relative orientations between the object and the image capture device will allow different views of the object to be obtained for analysis. These views are made with associated rotation or pivoting angles (αi) of the object, the other image capture conditions remaining the same for all image captures, and thus being known.

Thus, starting from an image li of object O in a given orientation αi, the relative orientation of object O with respect to the equipment formed by lit surface 2 and image capture device 3 is modified, to capture another image of the object according to a different angle.

The two obtained images I1, I2 each provide an outline S1, S2 of the object along the corresponding image capture direction (d1, d2). This outline provides a contour CD1, CD2 in the plane of image I1, 12.

Two or more images Si enable an envelope surface for the object to be defined, as will be explained by means of the diagram of Figure 3E, which is a geometric drawing in a plane perpendicular to axis ZZ, since it has been assumed that direction (d) of the image captures is in a horizontal plane.

The captured images are digital images processed by a computer 6, which records them at the same time as it records the image capture parameters, essentially the image capture direction angles (relative object/ image capture direction/distance orientation). Based on this data, computer may combine geometric shapes, as will be explained hereafter.

In order to obtain a surface enveloping object O and enabling at least approximate geometric parameters to be deduced therefrom, the images are combined. This combination is performed by a calculation program comprising the determination of the geometric intersection of two or several conical surfaces or cones C1, C2 obtained from the images.

The geometric features of an image capture bear as a suffix the numerical reference associated with each image capture and, generally, "i".

Thus, for each image capture, the relative position of image capture device 3 bears reference Pi, the contour of the outline of the captured image bears the reference CDi and the image capture direction bears the reference di.

The different image captures are shifted from one another or with respect to the first image capture, by an angle αi, which is the pivoting angle of object O with respect to a reference position of its support 1 or the angle α1 of an image capture device. In the case of an image capture device 3 and of a lit surface 2, which are both mobile, the different image captures will be performed according to a pivoting angle αi of the set around axis ZZ with respect to a fixed object O. To form the envelope surface of the object, the intersection of conical surfaces C1 associated with each image capture li is determined.

Figure 3B illustrates how an envelope surface, not shown in the drawing, is obtained based on two image captures that resulted in images I1, I2 with outline contours CD1, CD2 along image capture directions d1, d2 and positions P1, P2 of the image capture device.

According to an example method, the surface formed by the intersection of cones or conical surfaces is formed. Each conical surface is generated by a generatrix Gi passing through image capture point Pi and bearing on contour CDi of outline Si of image li of object O from this point Pi. The two cones C1, C2 of this example are placed with respect to each other to reconstruct the image capture conditions, that is, the geometric parameters of the image capture:
▪ apexes P1, P2 of the cones are placed at a distance X1 from a point representing reference mark PR of the object;
▪ image capture directions d1, d2 pass through reference point PR;
▪ the two image capture directions d1, d2 of the two image captures I1, I2 form together an angle αi equal to the pivoting angle αi of object O around its axis ZZ between the two image capture directions;
▪ the surface intersecting these two cones C1, C2 envelopes the object.

According to the shape of the object, image capture angles αi are selected that enable an envelope as close as possible to the shape of object O to be defined in the best manner. By increasing the number of image captures, the cone intersection surface is brought closer to the surface of the object.

The intersection of cones C1, C2, Ci is obtained by a mathematical method from the digital data of each gene
ratrix curve CDi and from the position of its image capture point Pi.

The envelope surface of the object enables the geometric features or parameters of the object to be determined, such as its largest dimension, its smallest dimension, the approximate limit of its volume, etc.

In the case of a volume having recesses completely crossing the volume, according to the geometric parameters which are desired to be determined, these empty volumes may be eliminated since they belong, in principle, to the contour of the object, which will be defined by a complex cone or a set of several cones having the same apex.

The geometric image capture conditions given hereabove in the case of Figure 3A are not imperative. Thus, the image capture direction di is not necessarily the horizontal direction and the distance x between the image capture device and reference point PR or reference axis ZZ of support 1 or of object O installed on support 1 are not necessarily the same for all image captures. Each time, it is sufficient for the distance x to be known to enable the construction of the intersection of the conical surfaces as generally described in the case of Figure 3B.

Figure 4 shows another example of a system for the implementation of the method of geometric analysis of an object. This drawing is similar to Figure 1, but completed by two other image capture devices 31, 32 and their associated lit surfaces 21, 22. The sets of image capture devices 31, 32 /lit surface 21, 22 for lighting object O from behind are generally located along three spatially orthogonal directions: two directions (d1, d2) in a horizontal plane and a direction (d13). For vertical direction (d13) ZZ, support 1 of object O is located above horizontal lit surface 22, thus lighting object O from below.

In the case of this system, the image capture directions (d1, d12, d13) of the three image capture devices pass, preferably, through reference point PR, which thus forms the center of an orthonormal reference frame.

In the case of several image capture devices as in this example, the image captures are for example performed sequentially and not simultaneously, so that object O is only lit from the back, each time, by the lit surface associated with one of the image capture devices. However, if the image capture directions are orthogonal, it is possible to perform simultaneous image captures, since the lighting in the different directions has no reciprocal influence or only a negligible one, and thus does not disrupt the outlines providing the contour of the object.

The use of the outlines of the images taken in the three orthogonal directions by means of the system of Figure 3 enables an envelope surface for the object to be determined.

Figure 5 shows a system similar to the previous ones, but more complete. This drawing shows, in addition to the image capture device/lit surface sets in three spatially orthogonal directions, another image capture device 61, 62, 63 in each case, with different optics (small or large field optics, fixed or variable focal length).

The system is also completed by three projectors 71, 72, 73 lighting object O in the three perpendicular directions.

Second image capture devices 61, 62, 63 may be used to capture images of the object, each time against a light background formed by lit surface 2, 21, 22.

Lighting devices 71, 72, 73 are off during these image captures of the outlines against the lit background.

The system however also enables a photograph of object O to be captured in the three image capture directions and, for this purpose, the object is lit by one or the three projectors 71, 72, 73, and the image capture is performed by means of one or the other of the two image capture devices.

These images of the object, which are not outline images, may be used for purposes other than the assessment of geometric features of the object from its outline in different directions.

Figure 6 schematically shows an embodiment of a system for capturing images along three spatial directions and implementing the above-described method.

In this example system, object O represented by a rectangular parallelepiped is placed on a support 101 formed by a generally horizontal support surface 101c, of rectangular or square shape, bordered by two inclined upward-directed surfaces 101a,b joining support surface 101c via curved areas 101d,e. Support 101 is placed in a retroreflective assembly formed by a horizontal lower surface 102c and two lateral surfaces 102a, 102b joining, each time, to form a dihedral. Lateral surfaces 102a,b are preferably inclined with respect to the vertical direction in the reference plane formed by lower surface 102c. Retroreflective surfaces 102a,b,c are formed by panels provided with a catadioptric-effect surface, that is, a surface reflecting the light in the incident direction. This retroreflective surface may be formed by paint, fabric, or auto-adhesive strips.

Respective image capture devices are associated with three non-coplanar spatial directions. Thus, an image capture device 131a equipped with a combined light source 104a directly associated therewith, that is, which emits light practically from the same point as that where image capture device 131a is located, corresponds to one of the directions. Combined light source 104a preferably is a ringshaped light source surrounding the lens of image capture device 131a. This image capture device is located in front of object O and a retroreflective surface 102a associated with this image capture direction is located on the other side of object O.

Since the image capture direction of image capture device 131a is slightly inclined with respect to the horizontal direction, assumed to be that of the plane or of the surface on which object O is positioned, the associated retroreflective surface 102a is preferably inclined to be perpendicular or substantially perpendicular to this image capture direction. Upward-directed surface 101a located on this image capture axis behind object O is preferably also inclined to be substantially perpendicular to this image capture direction.

One of the other image capture directions is also preferably slightly inclined with respect to the horizontal plane and is formed of elements identical to those described, that is, an image capture device 131b equipped with a combined light source 104b directly associated therewith. This equipment is in front of object O; a retroreflective surface 102b is placed on the other side of the object and an upward-directed surface 101b joining support surface 101c via a curved area 101e is also placed in front of this surface.

For the third image capture direction, which is substantially vertical or inclined with respect to the vertical direction with respect to the plane of support surface 101c, there also is an image capture device 131c, also equipped with its directly associated combined light source 104c. Image capture device 131c takes a top view of object O, towards support surface 101c and the retroreflective surface 102c placed thereunder.

Support surface 101c is held, for example, connected to retroreflective surfaces 102a,b,c, by support rods preferably aligned, each time, with the image capture direction of each of image capture devices 131a,b,c to leave only a weak mark on the captured image at each time.

The above-described image capture system enables the outline of the object to be obtained in the three image capture directions on the retroreflective background. As with the system of Figure 5, in this embodiment, image capture devices 161a,b,c have also been provided for normal image captures of object O in three directions (and no longer for obtaining a mere outline of the object). In this case, the lighting is for example ensured by pairs of projectors 171a,b,c, each associated with an image capture device 161a,b,c. These pairs of projectors may also be light boxes generally used to take pictures of objects and enabling a distribution of the light emitted towards the object over a significant surface area to evenly light the object and avoid the light being too concentrated on certain reflective surfaces towards the image capture device.

### NOMENCLATURE

- 1: object support
- 2, 21, 22: lit surface
- 3, 31, 32: image capture device
- 4: support of image capture device 3
- 5: panel
- 61, 62, 63: image capture device
- 71, 72, 73: projector
- 101: object support
101c support surface/lower surface
101a,b upward-directed surface
101d,e curved area
- 102a,b,c: retroreflective surface
- 104a,b,c: combined light source
- 131a,b,c: image capture device
- 161a,b,c: image capture device
- 171a,b,c: projectors, projector pairs
- O: object
- Pi (1, 2, ...): position of the image capture device
- Si: image of object O on the view / outline
- Gi: generatrix
- CDi (1, 2, ...): directrix curve
- di (1, 2, ...): image capture direction
- αi: angle between two image capture directions
- PR: reference point
- x: distance between the image capture device and reference point PR or axis ZZ
- ZZ: rotation axis of support 1 / vertical axis

## Claims

1. A method of geometrical analysis of an object comprising:
arranging the object on a support (101a, 101b, 101c) formed of a support surface (101c) for receiving the object and two upward-directed surfaces (101a, 101b), inclined with respect to the vertical direction and joining the support surface via curved areas (101d, 101e), the two-upward-directed surfaces (101a, 101b) bordering the support surface on two adjacent sides of the support surface, wherein the support is transparent;
placing the object in front of retroreflective surfaces (102a, 102b, 102c) arranged substantially parallel to the surfaces of the support (101c) and to the upward-directed surfaces (101a, 101b);
arranging a first image capture device (131a) with combined light source (104a) in front of the object, such that one of the retroreflective surfaces (102a) is arranged behind the object in line with the first image capture device (131a) and its combined light source (104a) to light the object from behind, by reflection, with respect to the first image capture device (131a), such that the object as captured by the first image capture device (131a) is silhouetted, and wherein the first image capture device (131a) is arranged such that the said one retroreflective surface (102a) is substantially perpendicular to the image capture direction of the first image capture device;
arranging the first image capture device, a second image capture device (131b) with combined light source (104b) and a third image capture device (131c) with combined light source (104c) along three non-coplanar directions and wherein each of the three retroreflective surfaces (102a, 102b, 102c) are substantially perpendicular to the image capture direction of one of the first, second or third image capture devices (131a, 131b, 131c);
taking at least one photograph of the silhouetted object by the first, second and third image capture devices (131a, 131b, 131c), to obtain images with an outline of the object; and
obtaining geometrical parameters of the object based on the outline of the silhouetted object.

2. A system for geometrical analysis of an object, comprising:
a support (101a, 101b, 101c) formed of a support surface (101c) for receiving an object thereupon and two upward-directed surfaces (101a, 101b), inclined with respect to the vertical direction and joining the support surface via curved areas (101d, 101e), the two-upward-directed surfaces (101a, 101b) bordering the support surface (101c) on two adjacent sides of the support surface (101c) wherein the support (101a, 101b, 101c) is transparent;
retroreflective surfaces (102a, 102b, 102c) arranged substantially parallel to the surfaces of the support (101c) and to the upward-directed surfaces (101a, 101b);
a first image capture device (131a) with combined light source (104a) placed in front of the object, such that one of the retroreflective surfaces (102a) is arranged behind the object in line with the first image capture device (131a) and its combined light source (104a) to light the object from behind, by reflection, with respect to the first image capture device (131a) such that the object as captured by the first image capture device (131a) is silhouetted, the said one retroreflective surface (102a) being substantially perpendicular to the image capture direction of the first image capture device (131a);
a second image capture device (131b) with combined light source (104b); and
a third image capture device (131c) with combined light source (104c);
wherein the three image capture devices (131a, 131b, 131c) are arranged along three non-coplanar directions and wherein each of the three retroreflective surfaces (102a, 102b, 102c) are substantially perpendicular to the image capture direction of one of the first, second or third image capture devices (131a, 131b, 131c); and
the system further comprising a processing device configured to take at least one photograph of the silhouetted object by the first, second and third image capture devices (131a, 131b, 131c), to obtain images with an outline (Si) of the object and to obtain geometrical parameters of the object based on the outline of the silhouetted object.

## Patentansprüche

1. Verfahren zur geometrischen Analyse eines Objekts, umfassend:
Anordnen des Objekts auf einem Träger (101a, 101b, 101c), der aus einer Trägerfläche (101c) zur Aufnahme des Objekts und zwei nach oben gerichteten Oberflächen (101a, 101b) gebildet ist, die in Bezug auf die vertikale Richtung geneigt sind und die die Trägerfläche über gekrümmte Bereiche (101d, 101e) verbinden, wobei die nach oben gerichteten Oberflächen (101a, 101b) die Trägerfläche an zwei benachbarten Seiten der Trägerfläche begrenzen, wobei der Träger transparent ist;
Platzieren des Objekts vor retroreflektierenden Oberflächen (102a, 102b, 102c), die im Wesentlichen parallel zu den Oberflächen des Trägers (101c) und zu den nach oben gerichteten Oberflächen (101a, 101b) angeordnet sind;
Anordnen einer ersten Bildaufnahmevorrichtung (131a) mit kombinierter Lichtquelle (104a) vor dem Objekt, so dass eine der retroreflektierenden Oberflächen (102a) hinter dem Objekt in Übereinstimmung mit der ersten Bildaufnahmevorrichtung (131a) und ihrer kombinierten Lichtquelle (104a) angeordnet ist, um das Objekt von hinten, in Bezug auf die erste Bildaufnahmevorrichtung (131a), durch Reflexion zu beleuchten, so dass das von der ersten Bildaufnahmevorrichtung (131a) erfasste Objekt silhouettiert ist, und wobei die erste Bildaufnahmevorrichtung (131a) so angeordnet ist, dass die eine retroreflektierende Oberfläche (102a) im Wesentlichen senkrecht zur Bildaufnahmerichtung der ersten Bildaufnahmevorrichtung steht;
Anordnen der ersten Bildaufnahmevorrichtung, einer zweiten Bildaufnahmevorrichtung (131b) mit kombinierter Lichtquelle (104b) und einer dritten Bildaufnahmevorrichtung (131c) mit kombinierter Lichtquelle (104c) entlang drei nicht-koplanarer Richtungen und wobei jede der drei retroreflektierenden Oberflächen (102a, 102b, 102c) im Wesentlichen senkrecht zur Bildaufnahmerichtung einer der ersten, zweiten oder dritten Bildaufnahmevorrichtungen (131a, 131b, 131c) steht;
Aufnehmen mindestens eines Fotos des silhouettierten Objekts durch die erste, zweite und dritte Bildaufnahmevorrichtung (131a, 131b, 131c), um Bilder mit einer Umrandung des Objekts zu erhalten; und
Erhalten geometrischer Parameter des Objekts basierend auf den Umrissen des silhouettierten Objekts.

2. System zur geometrischen Analyse eines Objekts, umfassend:
einen Träger (101a, 101b, 101c), der aus einer Trägerfläche (101c) zum Aufnehmen eines Objekts und zwei nach oben gerichteten Oberflächen (101a, 101b) gebildet ist, die in Bezug auf die vertikale Richtung geneigt sind und die Trägerfläche über gekrümmte Bereiche (101d, 101e) verbinden, wobei die nach oben gerichteten Oberflächen (101a, 101b) an die Trägerfläche (101c) auf zwei benachbarten Seiten der Trägerfläche (101c) angrenzen, wobei der Träger (101a, 101b, 101c) transparent ist;
retroreflektierende Oberflächen (102a, 102b, 102c), die im Wesentlichen parallel zu den Oberflächen des Trägers (101c) und zu den nach oben gerichteten Oberflächen (101a, 101b) angeordnet sind;
eine erste Bildaufnahmevorrichtung (131a) mit einer kombinierten Lichtquelle (104a), die vor dem Objekt angeordnet ist, so dass eine der retroreflektierenden Oberflächen (102a) hinter dem Objekt in Übereinstimmung mit der ersten Bildaufnahmevorrichtung (131a) und ihrer kombinierten Lichtquelle (104a) angeordnet ist, um das Objekt von hinten, durch Reflexion in Bezug auf die erste Bildaufnahmevorrichtung (131a) zu beleuchten, so dass das von der ersten Bildaufnahmevorrichtung (131a) aufgenommene Objekt silhouettiert ist, wobei die eine retroreflektierende Oberfläche (102a) im Wesentlichen senkrecht zur Bildaufnahmerichtung der ersten Bildaufnahmevorrichtung (131a) steht;
eine zweite Bildaufnahmevorrichtung (131b) mit kombinierter Lichtquelle (104b); und eine dritte Bildaufnahmevorrichtung (131c) mit kombinierter Lichtquelle (104c);
wobei die drei Bildaufnahmevorrichtungen (131a, 131b, 131c) entlang von drei nicht-koplanaren Richtungen angeordnet sind und wobei jede der drei retroreflektierenden Oberflächen (102a, 102b, 102c) im Wesentlichen senkrecht zur Bildaufnahmerichtung einer der ersten, zweiten oder dritten Bildaufnahmevorrichtungen (131a, 131b, 131c) steht; und
wobei das System ferner eine Verarbeitungsvorrichtung umfasst, die konfiguriert ist, um mindestens ein Foto des silhouettierten Objekts durch die ersten, zweiten und dritten Bildaufnahmevorrichtungen (131a, 131b, 131c) aufzunehmen, um Bilder mit einem Umriss (Si) des Objekts zu erhalten und geometrische Parameter des Objekts basierend auf dem Umriss des silhouettierten Objekts zu erhalten.

## Revendications

1. Procédé d'analyse géométrique d'un objet comprenant les étapes consistant :
à agencer l'objet sur un support (101a, 101b, 101c) formé d'une surface de support (101c) destinée à recevoir l'objet et de deux surfaces dirigées vers le haut (101a, 101b), inclinées par rapport à la direction verticale et se reliant à la surface de support par l'intermédiaire de zones incurvées (101d, 101e), les deux surfaces dirigées vers le haut (101a, 101b) bordant la surface de support sur deux côtés adjacents de la surface de support, où le support est transparent ;
à placer l'objet devant des surfaces rétroréfléchissantes (102a, 102b, 102c) agencées essentiellement parallèlement aux surfaces du support (101c) et aux surfaces dirigées vers le haut (101a, 101b) ;
à agencer un premier dispositif de capture d'image (131a) avec une source de lumière combinée (104a) devant l'objet, de sorte qu'une première surface des surfaces rétroréfléchissantes (102a) soit agencée derrière l'objet en ligne avec le premier dispositif de capture d'image (131a) et sa source de lumière combinée (104a) pour éclairer l'objet depuis l'arrière, par réflexion, par rapport au premier dispositif de capture d'image (131a), de sorte que l'objet tel que capturé par le premier dispositif de capture d'image (131a) apparaisse en silhouette, et où le premier dispositif de capture d'image (131a) est agencé de sorte que ladite première surface rétroréfléchissante (102a) soit essentiellement perpendiculaire à la direction de capture d'image du premier dispositif de capture d'image ;
à agencer le premier dispositif de capture d'image, un deuxième dispositif de capture d'image (131b) avec une source de lumière combinée (104b) et un troisième dispositif de capture d'image (131c) avec une source de lumière combinée (104c) le long de trois directions non coplanaires et où chacune des trois surfaces rétroréfléchissantes (102a, 102b, 102c) est essentiellement perpendiculaire à la direction de capture d'image de l'un des premier, deuxième et troisième dispositifs de capture d'image (131a, 131b, 131c) ;
à prendre au moins une photographie de l'objet en silhouette par les premier, deuxième et troisième dispositifs de capture d'image (131a, 131b, 131c), pour obtenir des images avec un contour de l'objet ; et
à obtenir des paramètres géométriques de l'objet sur la base du contour de l'objet en silhouette.

2. Système d'analyse géométrique d'un objet comprenant :
un support (101a, 101b, 101c) formé d'une surface de support (101c) destinée à recevoir un objet sur celle-ci et de deux surfaces dirigées vers le haut (101a, 101b), inclinées par rapport à la direction verticale et se reliant à la surface de support par l'intermédiaire de zones incurvées (101d, 101e), les deux surfaces dirigées vers le haut (101a, 101b) bordant la surface de support (101c) sur deux côtés adjacents de la surface de support (101c), où le support (101a, 101b, 101c) est transparent ;
des surfaces rétroréfléchissantes (102a, 102b, 102c) agencées essentiellement parallèlement aux surfaces du support (101c) et aux surfaces dirigées vers le haut (101a, 101b) ;
un premier dispositif de capture d'image (131a) avec une source de lumière combinée (104a) placé devant l'objet, de sorte qu'une première surface des surfaces rétroréfléchissantes (102a) soit agencée derrière l'objet en ligne avec le premier dispositif de capture d'image (131a) et sa source de lumière combinée (104a) pour éclairer l'objet depuis l'arrière, par réflexion, par rapport au premier dispositif de capture d'image (131a) de sorte que l'objet tel que capturé par le premier dispositif de capture d'image (131a) apparaisse en silhouette, ladite première surface rétroréfléchissante (102a) étant essentiellement perpendiculaire à la direction de capture d'image du premier dispositif de capture d'image (131a) ;
un deuxième dispositif de capture d'image (131b) avec une source de lumière combinée (104b) ; et
un troisième dispositif de capture d'image (131c) avec une source de lumière combinée (104c) ;
dans lequel les trois dispositifs de capture d'image (131a, 131b, 131c) sont agencés le long de trois directions non coplanaires et où chacune des trois surfaces rétroréfléchissantes (102a, 102b, 102c) est essentiellement perpendiculaire à la direction de capture d'image de l'un des premier, deuxième et troisième dispositifs de capture d'image (131a, 131b, 131c) ; et
le système comprenant en outre un dispositif de traitement configuré pour prendre au moins une photographie de l'objet en silhouette par les premier, deuxième et troisième dispositifs de capture d'image (131a, 131b, 131c), pour obtenir des images avec un contour (Si) de l'objet et pour obtenir des paramètres géométriques de l'objet sur la base du contour de l'objet en silhouette.
